# FASCICULE DE BREVET EUROPEEN

(11) **EP 1 701 992 B1**
(45) Date de publication et mention de la délivrance du brevet: **11.11.2015**
(21) Numéro de dépôt: 04816519.5
(22) Date de dépôt: 08.12.2004
(51) Int. Cl.: C08G 77/08

(54) **PROCEDE DE PREPARATION DE POLYORGANOSILOXANES (POS) PAR POLYMERISATION PAR OUVERTURE DE CYCLE(S) ET/OU REDISTRIBUTION DE POS, EN PRESENCE DE CARBENE(S) ET COMPOSITIONS DE POS MISES EN OEUVRE DANS CE PROCEDE**
VERFAHREN ZUR HERSTELLUNG EINES POLYORGANOSILOXANS (POS) DURCH RINGÖFFNENDE POLYMERISATION UND/ODER POS-UMLAGERUNG IN GEGENWART VON CARBEN(EN) UND DANACH HERGESTELLTE POS-VERBINDUNGEN
METHOD FOR PREPARING POLYORGANOSILOXANE (POS) BY RING(S)-OPENING POLYMERISATION AND/OR POS REDISTRIBUTION IN THE PRESENCE OF CARBENE(S) AND POS COMPOUNDS PRODUCED BY SAID METHOD

(30) Priorité: 30.12.2003 FR 0351232
(43) Date de publication de la demande: 20.09.2006
(73) Titulaire: Bluestar Silicones France SAS, 69003 Lyon (FR); CENTRE NATIONAL DE LA RECHERCHE SCIENTIFIQUE -CNRS-, 75016 Paris (FR)
(72) Inventeur: BLANC-MAGNARD, Delphine, F-69007 Lyon (FR); STERIN, Sébastien, F-69450 Saint Cyr Au Mont D'or (FR); FLEURY, Etienne, F-69540 Irigny (FR); BUISINE, Olivier, 69230 Saint Genis Laval (FR); BACEIREDO, Antoine, F-31500 Toulouse (FR)
(74) Mandataire: Cabinet Plasseraud
(86) Numéro de dépôt international: PCT/FR2004/050665
(87) Numéro de publication internationale: WO 2005/073279

(56) Documents cités:
- WO-A-03/099909
- US-A- 5 077 414
- US-A- 5 124 417
- NYCE GREGORY W.: "In Situ Generation of Carbenes: A General and Versatile Plattform for Organocatalytic Living Polymerisation" J.AM.CHEM.SOC., vol. 125, no. 10, 12 mars 2003 (2003-03-12), pages 3046-3056, XP002283820 2003 cité dans la demande
- FORTUNIAK W ET AL: "A ROUTE TO POLYSILOXANES WITH PENDANT IMIDAZOLE GROUPS. HYDROSILYATION OF N-ALLYLIMIDAZOLE HYDROCHLORIDE WITH METHYLDICHLOROSILANE", POLYMER BULLETIN, SPRINGER, HEIDELBERG, DE, vol. 38, no. 4, 1 April 1997 (1997-04-01), pages 371-378, XP000658654, ISSN: 0170-0839, DOI: 10.1007/S002890050062

## Description

Le domaine de l'invention est celui de la synthèse des silicones : PolyOrganoSiloxanes (POS), par polymérisation par ouverture de cycle(s) et/ou redistribution de POS linéaires et/ou non linéaires et/ou cycliques.

Plus précisément, l'invention concerne un procédé de préparation de POS par polymérisation par ouverture de cycle(s) et/ou redistribution de POS, notamment de POScy, en présence d'un catalyseur (ou amorceur) constitué par au moins un carbène nucléophile.

L'invention vise également des compositions de POS et de catalyseur carbénique, mises en oeuvre dans ces réactions de polymérisation par ouverture de cycle(s)/redistribution de POSs (POS) cycliques, conduisant à des POS huiles (masse molaire allant par exemple de 10³ à 10⁴) ou à des POS gommes (masse molaire allant par exemple de 10³ à 10⁷).

L'invention se rapporte aussi à certains POS ou silanes substitués par des fonctions catalytiques carbéniques, à titre de produits nouveaux perse.

Les silicones sont, de nos jours, largement utilisés dans l'industrie. La majeure partie de ceux-ci sont des siloxanes polymérisés ou sont basés sur ces dérivés. Pour cette raison, la synthèse de ces polymères par polymérisation par ouverture de cycle(s) est un axe de recherche très important et de nombreuses publications sont parues sur le sujet. La polymérisation par ouverture de cycle d'oligosiloxanes utilise des monomères facilement synthétisables et purifiables et en outre elle permet un meilleur contrôle du poids moléculaire du polymère obtenu. En pratique, cette méthode est l'une des voies industrielles utilisées à ce jour.
La polymérisation par ouverture de cycle (ROP : *"Ring Opening Polymerization*") des organosiloxanes cycliques est une technique largement utilisée dans l'industrie des silicones pour préparer des huiles, des gommes ou des résines, fonctionnalisées ou non.

La polymérisation par ouverture de cycles d'oligosiloxanes est un processus complexe :

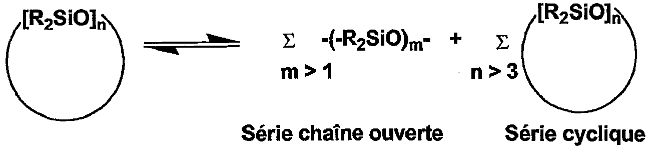

Les monomères les plus souvent utilisés à l'heure actuelle sont l'octaméthylcyclotétrasiloxane (D₄) et l'hexaméthylcyclotrisiloxane (D₃). La polymérisation peut être conduite par voie anionique via des catalyseurs basiques ou cationique via des catalyseurs acides.

La voie cationique est souvent préférée pour la synthèse de POS linéaires car la réaction se déroule à vitesse suffisamment grande, à température ambiante et l'amorceur peut être facilement éliminé du polymère. Le point négatif de cette méthode est la formation importante des POS cycliques qui apparaissent particulièrement dans les premiers temps de la polymérisation. Ce mode de polymérisation est basé sur l'augmentation de la réactivité de la liaison Si-O pour les monomères possédant un cycle tendu tels que les cyclotrisiloxanes. L'utilisation de ces substrats permet de travailler dans des conditions de contrôle cinétique.
Pour la polymérisation cationique, des catalyseurs type acides de Brönsted ou protoniques tels que H₂SO₄, HClO₄, acide triflique sont largement décrits. Ces acides peuvent également être mis sur des supports solides, minéraux par exemple. Ces catalyseurs sont efficaces à des températures modérées par exemple de l'ordre de 50 à 100°C. Les acides de Lewis: AICI3, SbCl₅, SnCl₄... peuvent également convenir mais nécessitent des conditions de température élevées (> 200°C). Les halogénures de phosphonitrile de structure Cl₃PNPCl₂NPCl₃.PCl₆ sont également décrits comme catalyseurs de polymérisation par ouverture de cycles efficaces à des températures de 40 à 120°C. Ce sont aussi de bons catalyseurs de condensation.

La voie anionique est plus souvent utilisée pour la formation de polymères linéaires à haut poids moléculaire. Ce procédé comporte 3 étapes :
- 1- la phase d'amorçage est l'attaque du siloxane par la base pour conduire à la formation d'un silanolate en bout de chaîne : 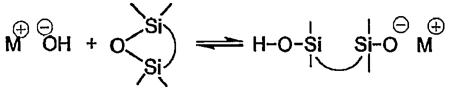
- 2- la prolongation-raccourcissement des chaînes : 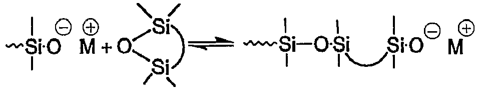
- 3- les échanges interchaînes (mélange de chaînes, redistribution) :

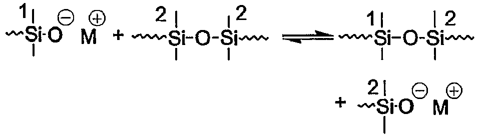

M correspond à un métal alcalin ou à un alcalinoterreux dans les schémas ci-dessus.

Quand les conditions d'équilibre sont atteintes, on obtient un mélange de POScy et de POS linéaires.

Beaucoup d'amorceurs différents sont utilisés pour réaliser cette polymérisation. Par exemple, les hydroxydes de métaux alcalins ou alcalino terreux ou les complexes d'hydroxydes de métaux alcalins ou alcalino terreux avec des alcools, ainsi que les silanolates de métaux alcalins ou alcalino terreux. Ces derniers permettent d'éviter l'étape d'amorçage. La réaction de polymérisation nécessite une température élevée. La réaction peut être conduite à sec, dans un solvant ou en émulsion. La polymérisation peut être arrêtée en utilisant un additif acide qui réagit avec l'amorceur ou avec les chaînes polymériques pour rendre celles-ci non réactives. De plus, ces additifs peuvent être utilisés pour réguler le poids moléculaire du polymère et/ou ajouter une propriété intéressante. Dans la plupart des cas, les résidus de l'amorceur restent dans le polymère produit ou sont éliminés. Cela pénalise lourdement le procédé industriel de polymérisation par ouverture de cycle(s) et/ou par redistribution de POScy en présence de K⁺OH⁻ ou SiO⁻M⁺, lequel procédé possède en outre l'inconvénient majeur d'être long et de se dérouler à haute température (par exemple pour le SiO⁻, K⁺ environ 10 heures à 150°C). La cinétique de cette réaction est liée à la nature de l'anion et du contre ion. Pour un anion identique, plus le contre ion est volumineux et mou, plus la cinétique est rapide (par exemple Li⁺ < Na⁺ <K⁺ < NR₄⁺ < PR₄⁺). La solubilité de l'amorceur dans le milieu réactionnel est aussi très importante au regard de la cinétique. Ainsi, le KOH est peu soluble et doit donc être mis en oeuvre dans des conditions de température élevée (≥ 150°C).

Il existe d'autres composés catalytiques comme les phosphoniums quaternaires, notamment l'hydroxyde de tétrabutylphosphonium et les ammoniums quaternaires comme l'hydroxyde de tétraméthylammonium. Ces catalyseurs sont solubles dans le milieu polyorganosiloxane et peuvent polymériser le D4 à des températures comprises entre 70 et 130°C. Ces catalyseurs sont sensibles à la présence d'eau et se dégradent thermiquement à partir de 130-150°C.
Enfin, les super bases dites bases de Schwesinger, générant facilement en présence d'eau ou de méthanol, les hydroxydes ou des méthylates correspondant, sont d'excellents catalyseurs de polymérisation. En effet, ces systèmes ayant un contre-ion mou présentent une faible tendance à l'association des paires d'ions et favorisent l'amorçage et la polymérisation des organocyclosiloxanes. Ces catalyseurs fonctionnent à basse température (80°C) comme à température élevée (140°C) et sont bien adaptés à des procédés en continu. Leur coût est très élevé.
Ainsi, les demandes de brevets européens suivantes : EP A-0 860 459, EP-A-0 860 460, EP-A-0 860 461, concernent l'emploi de superbases phosphazènes pour la polymérisation par ouverture de cycles de POScy, en présence d'eau et éventuellement de charge (silice), voire en bloquant la réaction de polymérisation à l'aide de CO₂ ou d'acide.
Le brevet US-B-5 994 490 divulgue un système similaire qui est obtenu en mélangeant des phosphazènes et un alcool tertiaire : e.g. le tert-butanol.
Les demandes de brevets européens suivantes EP-A-1 008 598, EP-A-1 008 610, EP-A-1 008 611, EP-A-1 008 612, décrivent elles aussi des superbases phosphazènes de type [(Me₂N)₃P=N-((Me₂)N₂P=N)ₙP⁺(NMe₂)],OH⁻ ou [(Me₂N)₃P=N]₃P=N-t-Bu pour la polymérisation par ouverture de cycles de POS.
La demande de brevet français FR-A-2 708 586 divulgue des phosphazènes linéaires de formules : OCl₂P(NPCl₂)nNPCl₂X avec X=OH, O ou Cl, utiles comme catalyseurs pour la polymérisation par ouverture de cycle(s) et la redistribution de POS, ainsi que les produits de réaction de ces phosphazènes linéaires avec l'eau ou un alcool.
La demande de brevet européen EP-A-0 982 346 décrit un procédé pour produire un POS ayant une teneur en volatils (POScy) inférieure à 1% en poids, à l'aide d'une polymérisation par condensation d'un siloxane porteur de groupements silanol ou au moyen d'une d'une polymérisation par ouverture de cycles de POScy (D4), avec une superbase de type phosphazène et en présence d'eau. Après neutralisation du catalyseur, le POS obtenu est soumis à un traitement de revaporisation pour éliminer les volatils (D4) à plus de 200°C.
La demande PCT WO-A-98/54229 décrit l'utilisation, comme base forte, d'ylures de phosphore de formule (Me)₂C=P(NMe₂)₃, [ainsi que de leur précurseur (Me)₂C-P⁺(NMe₂)₃,Y⁻ avec Y= Halogène ou triflate] faiblement nucléophile, dans des réactions de C-alkylation de lactames, de succinimides, d'oligopeptides et de benzodiazépines.
La demande PCT WO-A-03/054058 concerne la synthèse de silicone par polymérisation anionique d'oligomères organosiloxanes cycliques, en présence d'une superbase faiblement nucléophile à base de dérivés d'ylures d'aminophosphonium de formule 3 suivante : 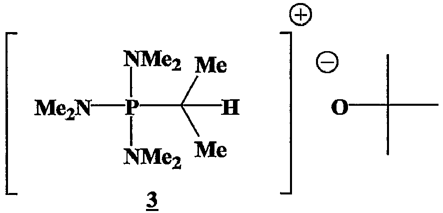 ou de dérivés de phosphoranylidènes de formule 6 :

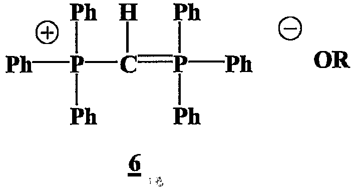

En tout état de cause, la polymérisation de POScy, par exemple des D4, avec des amorceurs anioniques ou cationiques s'accompagne pratiquement toujours pour l'heure, de réactions de "back biting" conduisant à un équilibre thermodynamique, dont la conséquence est la présence en fin de réaction de quantité non négligeable en monomères cycliques (de 15 à 30%).

Par ailleurs, des complexes Platine/carbène sont connus comme catalyseur d'hydrosilylation de POS à motifs ≡Si-Vinyle, au moyen de POS à motifs ≡Si-H. A titre d'exemple, on peut citer la demande PCT WO-A-02/098971 qui décrit une composition silicone réticulable en élastomère par hydrosilylation, en présence de catalyseurs métalliques à base de carbènes. Cette composition comprend :
- un polyorganovinylsiloxane (polydiméthyl)(méhylvinyl)siloxane,
- un polyorganohydrogénosiloxane,
- un catalyseur au platine formé par un complexe C3 ou C4 : 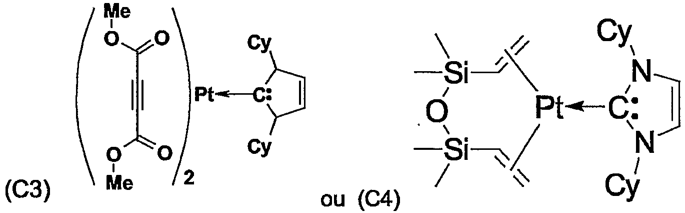
- éventuellement un inhibiteur de réticulation,
- et éventuellement une charge.

L'hydrosilylation n'est ni une polymérisation par ouverture de cycle(s), ni une polymérisation par redistribution. Dans une telle hydrosilylation, le carbène joue seulement le rôle de ligand du platine.
Les carbènes utiles en tant que ligands de métaux catalytiques, sont exploités dans d'autres domaines que celui des silicones. Ainsi, le brevet EP-B-0 971 941 décrit des catalyseurs à base de complexes Ruthénium et Osmium/carbène, pour la métathèse thermique de cyclooléfines.

En outre, un article de J.L. Hedrick et al paru en 2002, (JACS 124, n° 6 p 914-915, 2002), enseigne que des carbènes N-hétérocycliques peuvent être utilisés comme catalyseur de polymérisation d'esters cycliques. Plus précisément, le 1,3-bis-(2,4,6-triméthylphényl)imidazol-2-ylidène a été testé comme catalyseur de polymérisation du L-lactide, de l'ε caprolactone et du β-butyrolactone, en présence d'un alcool utilisé comme amorceur. Du point de vue mécanisme, les auteurs pensent que puisque le pKa est très élevé (pKa = 24, mesuré dans le DiMéthylSulfOxyde), le carbène est très nucléophile et peut donc attaquer le monomère ester cyclique pour donner une espèce activée susceptible d'attaquer l'alcool de l'amorceur ou de la chaîne en croissance selon un processus d'initiation/propagation représenté ci-dessous :

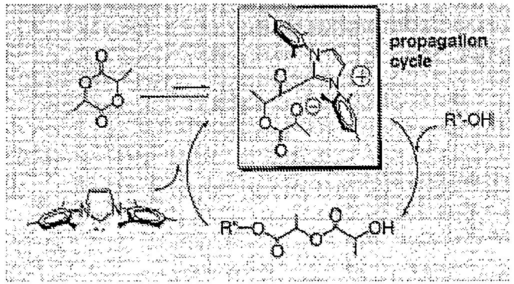

Un article plus récent et plus complet (cf. JACS 125, n° 10 p 3046-3056, 2003) décrit la préparation de carbène in-situ pour éviter les problèmes d'hydrolyse. Les promoteurs utilisés sont de type thiazolium, imidazolium et imidazolinium donnant respectivement des catalyseurs thioazole carbène, imidazole-2-ylidène carbène et imidazolin-2-ylidène carbène, lorsqu'ils sont mis en présence ter-butylate de potassium. Des tests de polymérisation montrent que la première famille de catalyseurs ne permet pas d'obtenir de manière rentable et sélective des hauts poids moléculaires.

En présence de cet état de la technique, l'un des objectifs essentiels de l'invention est de perfectionner la préparation de POS par ouverture de cycle(s) et/ou par redistribution de POS, au moyen d'un système catalytique qui soit plus efficace que ceux utilisés auparavant, et ce même à basse température et qui permette d'obtenir, de manière rentable et sélective, un polyorganosiloxane linéaire ou non linéaire, fonctionnalisé ou non.
Un autre objectif essentiel de l'invention est de fournir un nouveau procédé de synthèse de silicones PolyOrganoSiloxanes, par polymérisation par ouverture de cycle(s) et/ou redistribution de POS linéaires ou cycliques, dans lequel le rendement de la conversion, à température ambiante, des POS de départ (par exemple de D4) est considérablement accru par rapport à ce qui existe, de manière à obtenir des taux résiduels en POS de départ (par exemple de D4) plus faibles qu'avec les systèmes catalytiques les plus souvent décrits.
Un autre objectif essentiel de l'invention est de fournir un nouveau procédé de synthèse de silicones PolyOrganoSiloxanes, par polymérisation par ouverture de cycle(s) et/ou redistribution de POS linéaires ou cycliques -de préférence cycliques-, qui soit simple et économique à mettre en oeuvre, notamment en ce qui concerne les étapes finales de purification, à savoir par exemple la neutralisation et la dévolatilisation.
Un autre objectif essentiel de l'invention est de fournir un nouveau procédé de synthèse de silicones PolyOrganoSiloxanes, par polymérisation par ouverture de cycle(s) et/ou redistribution de POS linéaires ou cycliques -de préférence cycliques-, au moyen d'un système catalytique performant, qui présente au moins l'une des caractéristiques suivantes :
* soluble dans les huiles silicones et en particulier les gommes silicones ;
* simple et peu coûteux à synthétiser ;
* stable ;
* doté d'une bonne tenue à l'hydrolyse ;
   et qui permette :
* de polymériser les POS tels que des POScy (e.g. D₄), dans des conditions douces (basses températures ≤ 100°C) ;
* de diminuer les temps de réaction en particulier pour la préparation des huiles visqueuses et des gommes ;
* de réduire, voire de supprimer, les résidus de catalyseur et de ses dérivés dans le polymère final, afin de préparer des polymères silicone de forte viscosité et de tenue thermique améliorée, et ce de façon rentable ;
* de fonctionnaliser toute une palette de POS cycliques, linéaires ou non linéaires et fonctionnalisés ou non ;
* d'améliorer la polydispersité des polymères formés et de privilégier la formation de structures linéaires par rapport aux oligomères cycliques ;
* une élimination aisée des éventuels résidus de catalyseurs ;
* de privilégier la formation de polymères silicone linéaires par rapport à la formation de cycliques ;
* de garantir une haute reproductibilité ;
* et de limiter la sensibilité à la variabilité des matières premières.

Un autre objectif essentiel de l'invention est de fournir un nouveau système catalytique performant pour la synthèse de silicones PolyOrganoSiloxanes, par polymérisation par ouverture de cycle(s) et/ou redistribution de POS linéaires ou cycliques, ledit système catalytique étant doté de tout ou partie des propriétés visées dans les objectifs ci-dessus.

Un autre objectif essentiel de l'invention est de fournir une composition utilisable notamment pour la préparation de PolyOrganoSiloxanes (POS) par ouverture de cycle(s) et/ou par redistribution de POS, comprenant des POS linéaires, non linéaires ou cycliques (POScy) et un catalyseur (C) performant doté de tout ou partie des propriétés visées dans les objectifs ci-dessus.

Un autre objectif essentiel de l'invention est de fournir de nouveaux POS ou silanes substitués par des radicaux catalytiques, utiles dans la synthèse performante de silicones POS, par polymérisation par ouverture de cycle(s) et/ou par redistribution de POS linéaires, non linéaires ou cycliques.

Ces objectifs, parmi d'autres, sont atteints par la présente invention qui concerne, tout d'abord, un procédé de préparation de PolyOrganoSiloxanes (POS) par polymérisation par ouverture de cycle et/ou par redistribution de POS, en présence d'un catalyseur (C) caractérisé en ce que ce catalyseur (C) comprend au moins un carbène.

Il est du mérite des inventeurs d'avoir vaincu le préjugé technique qui voulait que, jusqu'alors, la transposition, dans la chimie des silicones, des carbènes utilisés comme catalyseurs de polymérisation d'esters cycliques ne soit pas possible, ni envisageable. Rien ne pouvait laisser prévoir que les carbènes ou leurs précurseurs seraient compatibles avec le milieu silicone. La chimie des silicones est très éloignée de la chimie des lactones. Malgré tout cela les inventeurs n'ont pas hésité à réaliser de longs et nombreux essais, au terme desquels ils ont mis en évidence, de manière totalement surprenante et inattendue, que les carbènes sont particulièrement appropriés pour la préparation de silicones PolyOrganoSiloxanes, par polymérisation anionique (polymérisation par ouverture de cycle(s) / redistribution) de polyorganosilxanes (POS) linéaires ou cycliques -de préférence cycliques-.
Le procédé selon l'invention est non seulement beaucoup plus efficace que jadis, mais également économique. Il est en outre simple à mettre en oeuvre, puisque les opérations de purification (neutralisation/volatilisation) sont allégées, voire supprimées. Ce procédé permet d'accéder à des POS de viscosité variable, y compris des POS de viscosité élevée.

Au sens de l'invention, la "polymérisation par ouverture de cycle(s)", correspond à une polymérisation dans laquelle un composé cyclique (monomère) est ouvert pour former un polymère linéaire.
Au sens de l'invention, la "polymérisation par redistribution", correspond à l'acception de l'homme du métier dans la chimie des silicones. En particulier, la "polymérisation par redistribution" s'entend dans le domaine des silicones, comme un réarrangement d'organosiloxanes de structures et/ou de masse molaire différentes. Ce réarrangement conduit à un seul nouveau POS.

Avantageusement, le procédé de préparation de POS selon l'invention implique donc un mécanisme de polymérisation par ouverture de cycle et/ou par redistribution de POS, à l'exclusion de toute réaction d'hydrosilylation. Le catalyseur (C) carbénique mis en oeuvre a pour caractéristique d'être nucléophile et cette nucléophilie est directement impliquée dans la catalyse de polymérisation par ouverture de cycle et/ou par redistribution de POS, à l'exclusion de toute réaction d'hydrosilylation.

Suivant une caractéristique intéressante de l'invention, le (ou les) carbène(s) du catalyseur (C) comportent deux électrons non-liants qui sont sous la forme singulet ou triplet, de préférence singulet.

De préférence, le (ou les) carbène(s) du catalyseur (C) possède(nt) une structure générale représentée par la formule (I°) : 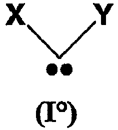 dans laquelle :
▪ X et Y sont indépendamment choisis dans le groupe comprenant : S, P, Si, N et O ;
▪ X et Y sont éventuellement substitués ;
▪ X et Y peuvent être reliés par au moins un cycle hydrocarboné à cinq, six ou sept chaînons éventuellement substitué(s) ; ou bien un hétérocycle à cinq, six ou sept chaînons comprenant un ou plusieurs hétéroatomes choisis dans le groupe comprenant : S, P, Si, N et O, et éventuellement substitué(s).

Suivant un premier mode de mise en oeuvre du procédé selon l'invention, les carbènes utilisés sont des carbènes, avantageusement stables, possèdant une structure générale représentée par les formules (I), (I') ou (I") : 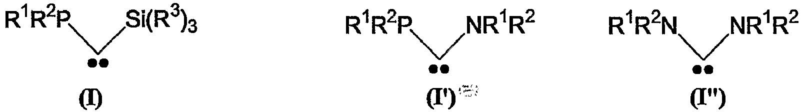 dans laquelle :
- R¹, R² et R³ identiques ou différents représentent indépendamment un groupement alkyle ; cycloalkyle éventuellement substitué ; aryle éventuellement substitué ; ou bien
- Les groupements R¹ et R² peuvent former ensemble un cycle hydrocarboné à cinq ou six chaînons éventuellement substitué ; ou bien un hétérocycle à cinq ou six chaînons comprenant un ou plusieurs hétéroatomes choisis dans le groupe comprenant : S, P, Si, N et O, et éventuellement substitué(s).

Selon un deuxième mode de mise en oeuvre du procédé selon l'invention, le (ou les) carbène(s) du catalyseur (C) réponde(nt) à la formule (II) ou (II') : 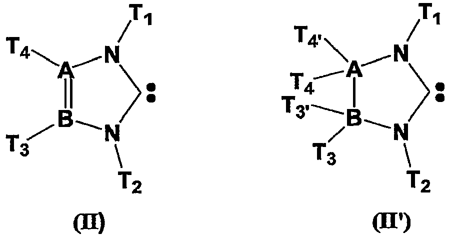 dans laquelle :
- A et B représentent indépendamment C ou N, étant entendu que :
   - dans la formule (II), lorsque A représente N, alors T4 n'est pas présent et lorsque B représente N, alors T3 n'est pas présent ;
   - dans la formule (II'), lorsque A représente N, alors T4 ou T4' n'est pas présent et lorsque B représente N, alors T3 ou T3' n'est pas présent ;
- T3, T3', T4 et T4' représentent indépendamment un atome d'hydrogène ; un groupement alkyle ; cycloalkyle éventuellement substitué par alkyle ou alkoxy ; aryle éventuellement substitué par alkyle ou alkoxy ; alcényle ; alcynyle ; ou arylalkyle dans lequel la partie aryle est éventuellement substituée par alkyle ou alkoxy ; ou bien
- T3 et T4 peuvent former ensemble et avec A et B quand ceux-ci représentent chacun un atome de carbone, un aryle étant entendu que dans ce cas T3' et T4' ne sont pas présent ;
- T1 et T2 représentent indépendamment un groupement alkyle ; un groupement alkyle éventuellement substitué par alkyle ; un groupement alkyle perfluoré ou éventuellement substitué par un groupement perfluoroalkyle ; cycloalkyle éventuellement substitué par alkyle ou alkoxy ; aryle éventuellement substitué par alkyle ou alkoxy ; alcényle ; alcynyle ; ou arylalkyle dans lequel la partie aryle est éventuellement substituée par alkyle ou alkoxy ; ou bien
- T1 et T2 représentent indépendamment un radical monovalent de formule **(V)** suivante :

   **-V1-V2 (V)**

   dans laquelle :
   - V1 est un groupement divalent hydrocarboné saturé ou non, de préférence un alkylène linéaire ou ramifié en C1-C10, éventuellement substitué,
   - V2 est un groupement monovalent choisi dans le groupe des groupements suivants :
      ◆ alcoxy, -OR^{a} avec R^{a} correspondant à hydrogène, alkyle, aryle ;
      ◆ silyl, -Si(OR^{b})ₓ(R^{c})₃₋ₓ avec R^{b} correspondant à hydrogène, alkyle, silyle ou siloxanyle, R^{c} correspondant à alkyle, aryle et x étant un entier compris entre 0 et 3 ;
      ◆ amine, de préférence -N(R^{a})₂ avec R^{a} correspondant à hydrogène, alkyle, aryle ; ou bien encore ;
- les groupements T1, T2, T3, T3', T4 et T4' peuvent former deux à deux, lorsqu'ils sont situés sur deux sommets adjacents dans les formules **(II)** et **(II'),** une chaîne hydrocarbonée saturée ou insaturée.

Par alkyle, on désigne une chaîne hydrocarbonée saturée, linéaire ou ramifiée, éventuellement substituée (e.g. par un ou plusieurs alkyles), de préférence de 1 à 10 atomes de carbone, par exemple de 1 à 8 atomes de carbone, mieux encore de 1 à 7 atomes de carbone.
Des exemples de groupements alkyle sont notamment méthyle, éthyle, isopropyle, n-propyle, tert-butyle, isobutyle, n-butyle, n-pentyle, isoamyle et 1,1-diméthylpropyle.
La partie alkyle du groupement alcoxy est telle que définie ci-dessus.
Le groupement alkyle perfluoré ou éventuellement substitué par un groupement perfluoroalkyle correspond, de préférence, à la formule :

**-(CH₂)ₚ-C_{q}F_{2q+1}**

dans laquelle p représente 0, 1, 2, 3 ou 4 ; q est un entier de 1 à 10 ; et C_{q}F_{2q+1} est linéaire ou ramifié. Des exemples préférés de ce groupement sont : -(CH₂)₂-(CF₂)₅-CF₃ et -(CF₂)₇-CF₃.

L'expression aryle désigne un groupement hydrocarboné aromatique, ayant de 6 à 18 atomes de carbone, monocyclique ou polycyclique et de préférence monocyclique ou bicyclique. Il doit être entendu que, dans le cadre de l'invention, par groupement aromatique polycyclique, on entend un groupement présentant deux ou plusieurs noyaux aromatiques, condensés (orthocondensés ou ortho et péricondensés) les uns aux autres, c'est-à-dire présentant, deux à deux, au moins deux carbones en commun.
Ledit groupement hydrocarboné aromatique ("aryle") est éventuellement substitué par exemple par un ou plusieurs alkyles en C1-C3, un ou plusieurs groupements hydrocarbonés halogénés (e.g. CF₃), un ou plusieurs alcoxy (e.g. CH₃O) ou un ou plusieurs groupements hydrocarbonés comprenant un ou plusieurs motifs cétone (e.g. CH₃CO-).
A titre d'exemple d'aryle, on peut mentionner les radicaux phényle, naphtyle, anthryle et phénanthryle.

L'expression arylalkyle désigne un groupement alkyle tel que défini ci-dessus, substitué par un ou plusieurs groupements aryle sur sa chaîne hydrocarbonée, le groupement aryle étant tel que défini ci-dessus. Des exemples en sont benzyle et triphénylméthyle.
Par cycloalkyle, on entend un groupement hydrocarboné saturé mono- ou polycyclique, de préférence mono- ou bicyclique, présentant préférablement de 3 à 10 atomes de carbone, mieux encore de 3 à 8. Par groupement hydrocarboné saturé polycyclique, on entend un groupement présentant deux ou plusieurs noyaux cycliques rattachés les uns aux autres par des liaisons σ ou/et condensés deux à deux.
Des exemples de groupements cycloalkyle polycycliques sont adamantane et norbornane.
Des exemples de groupements cycloalkyle monocycliques sont cyclopropyle, cyclobutyle, cyclopentyle, cyclohexyle, cycloheptyle et cyclooctyle.
Par alcényle, on entend une chaîne hydrocarbonée insaturée, linéaire ou ramifiée, substituée ou non, présentant au moins une double liaison oléfinique, et plus préférablement une seule double liaison. De préférence, le groupement alcényle présente de 2 à 8 atomes de carbone, mieux encore de 2 à 6. Cette chaîne hydrocarbonée comprend éventuellement au moins un hétéroatome tel que O, N, S. Des exemples préférés de groupements alcényle sont les groupements allyle et homoallyle.
Par alcynyle, on entend selon l'invention, une chaîne hydrocarbonée insaturée, linéaire ou ramifiée, substituée ou non, présentant au moins une triple liaison acétylénique, et plus préférablement une seule triple liaison. De préférence, le groupement alcynyle présente de 2 à 8 atomes de carbone, mieux encore de 2 à 6 atomes de carbone. A titre d'exemple, on peut citer le groupement acétylényle, ainsi que le groupement propargyle. Cette chaîne hydrocarbonée comprend éventuellement au moins un hétéroatome tel que O, N, S.
Par silyle, on entend selon l'invention, un groupement linéaire ou ramifié contenant au moins un atome de silicium. Les chaînes polydiméthylsiloxane sont des exemples de groupements silyle.

Les carbènes de formule **(II)** et **(II')** peuvent présenter au moins deux noyaux condensés, c'est-à-dire que deux groupements au moins parmi T1, T2, T3, T3', T4 et T4' situés sur deux sommets adjacents, forment ensemble une chaîne hydrocarbonée saturée ou insaturée, présentant de préférence de 3 à 6 atomes de carbones. Par chaîne hydrocarbonée saturée ou insaturée, on entend une chaîne hydrocarbonée linéaire ou ramifiée pouvant présenter ou non une ou plusieurs insaturations de type double liaison oléfinique ou triple liaison acétylénique.

Concernant les formes préférées de réalisation dans les formules (II) ou (II'), ce sont des formes dans lesquelles A = B = atome de carbone dans la formule (II) donnée supra.
Des significations préférées pour T1 et T2 dans cette formule (II) sont :
- alkyle, en particulier n-propyle, n-pentyle, néo-pentyle (-CH₂-C(CH₃)₃) ;
- cycloalkyle, en particulier cyclopentyle, cyclohexyle ou adamantyle ;
- alcényle, en particulier allyle (-CH₂-CH=CH₂), méthallyle (-CH₂-C(CH₃)=CH₂) ;
- alcynyle, en particulier propargyle, homopropargyle (-(CH₂)₂-C≡CH) ;
- ou groupement monovalent (V) défini supra, en particulier :

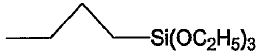

Toujours dans la formule **(II)** et de préférence, T3 et T4 correspondent tous deux à l'hydrogène ou forment ensemble un aryle, et mieux encore un phényle.

A titre d'exemples de carbènes, on peut citer ceux décrits dans le tableau 2, page 48 de la publication "Bourissou et al. Chem. Rev. 2000, 100, 39-91". Ce tableau 2, page 48, est inclus par référence dans le présent exposé.

Conformément à l'invention, le (ou les) carbène(s) :
- est (sont) préparé(s) séparément,
- et/ou est (sont) généré(s) in-situ à partir d'au moins un précurseur.

Avantageusement, le (ou les) précurseur(s) est (sont) un sel(s) correspondant(s) au(x) carbène(s), qui est (sont) mis à réagir avec au moins une base, de manière à générer in-situ le (ou les) carbène(s).
Ainsi, pour les carbènes préférés de formule (II) et (II') le (ou les) sel(s) correspondant(s) est (sont) un (ou des) sel(s) hétérocyclique(s) correspondant(s) de formule générale (III) ou (III') : 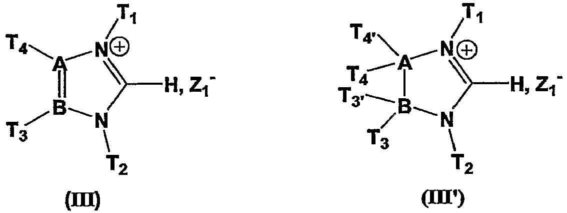 dans laquelle :
- A, B, T1, T2, T3, T3', T4 et T4' sont tels que définis ci-dessus ;
- Z1 représente indépendamment un anion dérivé d'un acide de Brönsted (acide protique) de préférence choisi dans le groupe comprenant :
   - les acides carboxyliques de formule Gₒ-COOH dans laquelle Gₒ représente un alkyle, et avantageusement un alkyle en C1-C22 ; un aryle, avantageusement un aryle en C6-C18 éventuellement substitué par un ou plusieurs alkyle en C1-C6 ;
   - les acides sulfoniques de formule Gₒ-SO₃H dans laquelle Gₒ est tel que défini ci-dessus ;
   - les acides phosphoriques de formule Gₒ-PO₃H dans laquelle Gₒ est tel que défini ci-dessus ;
   - les acides minéraux suivants : HF, HCl, HBr, HI, H₂SO₄, H₃PO₄, HClO₄ et HBF₄ pris à eux seuls ou en combinaison entre eux ;
   - et leurs mélanges.

Concernant le sel **(III),** l'anion Z₁⁻ est l'anion dérivé d'un acide de Brönsted (acide protique) organique ou minéral. Habituellement, l'anion Z₁⁻ est dérivé d'un acide présentant un pKa inférieur à 6. De préférence, Z₁⁻ dérive d'un acide de pKa inférieur à 4, mieux encore inférieur à 2. Les pKa dont il est question ici sont les pKa des acides tels que mesurés dans l'eau.
Des exemples d'acides sont les acides carboxyliques de formule :
Gₒ-COOH, dans laquelle Gₒ représente alkyle, et par exemple (C1-C22)alkyle ; ou bien aryle, et par exemple (C6-C18)aryle éventuellement substitué par un ou plusieurs alkyle, de préférence un ou plusieurs (C1-C6)alkyle ; les acides sulfoniques de formule : Gₒ-SO₃H, dans laquelle Gₒ est tel que défini ci-dessus ; et les acides phosphoniques de formule : Gₒ-PO₃H dans laquelle Gₒ est tel que défini ci-dessus ; d'autres acides sont HF, HCl, HBr, HI, H₂SO₄, H₃PO₄, HClO₄ et HBF₄.
Des exemples préférés d'acides carboxyliques sont l'acide acétique, l'acide benzoïque, et l'acide stéarique. A titre d'acide sulfonique préféré, on citera l'acide benzène sulfonique et à titre d'acide phosphonique préféré, on mentionnera l'acide phénylphosphonique.
Selon l'invention, on préfère plus particulièrement les anions 21- dérivés des acides HCl, HI et HBF₄ et HPF₆.
Ainsi, des anions Z₁⁻ particulièrement préférés, selon l'invention, sont les anions halogénure et le tétrafluoroborate et hexafluorophosphate.

On donne ci-dessous quelques exemples de sels d'imidazolium.

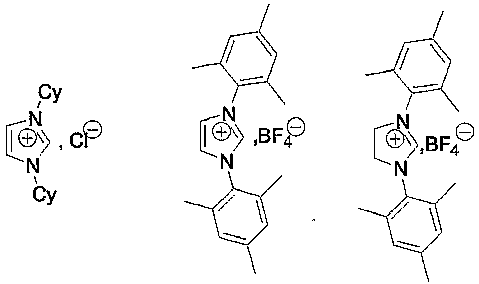

Ces consommables sont soit disponibles dans le commerce, soit facilement préparés par l'homme du métier à partir de composés commerciaux.
Une méthode de synthèse des sels de formule (III) dans laquelle A = B = C est décrite dans US-B-5 077 414.

Ce procédé comprend la réaction :
⇒ d'un composé α-dicarbonylé de formule (X) suivante : 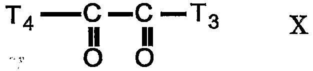 dans laquelle T3 et T4 sont tels que définis ci-dessus
⇒ avec HCHO et deux amines de formules T1-NH₂ et T2-NH₂, en présence d'un acide approprié.

La nature de l'anion Z1 dans les sels de formule **(III)** dépend de l'acide utilisé à cette étape. Les acides utilisables sont par exemple ceux énumérés ci-dessus et ceux dont dérive Z1.
D'autres méthodes de préparation des sels de formule **(III)** sont proposées dans Chem. Eur. J. 1996, 2, n° 12, pages 1627-1636 et Angew. Chem. Int. Ed. Engl. 1997, 36, 2162-2187.

Concernant l'aspect méthodologie du procédé selon l'invention, il peut être aussi bien être mis en oeuvre de façon continue que de façon discontinue.
Suivant une méthodologie préférée, le procédé est mis en oeuvre, en catalyse homogène, dans un milieu réactionnel liquide dans lequel sont au moins partiellement solubilisés le catalyseur (C) à base de carbène(s) et/ou son (ou ses) précurseur(s) et les oligoorgano(cyclo)siloxanes, et éventuellement au moins une base.

Avantageusement, on contrôle la solubilité du catalyseur (C) à base de carbène(s) et/ou de son (ou ses) précurseur(s), à l'aide d'au moins un auxiliaire de solubilisation et/ou en utilisant un (ou des) carbène(s) substitué(s) par au moins un groupement approprié.
A titre d'exemples d'auxiliaires de solubilisation, on peut citer les solvants tels que le TétraHydroFurane (THF), le toluène, etc.
A titre d'exemples de groupements de solubilisation, on peut citer les alkyles, les aryles, les groupements fluorés, les silyles, les siloxanes tels que les chaînes PolyDiMéthylSiloxane, etc.
Ces groupements peuvent appartenir aux formules **(I°), (I), (I'), (II), (Il'), (III), (III')** définies ci-dessus.

L'un des avantages surprenants des carbènes judicieusement sélectionnés conformément à l'invention, tient à la possibilité de réaction rapide à basse température. Ainsi, le procédé est caractérisé en ce que la polymérisation par ouverture de cycle(s) et/ou redistribution est réalisée à une température T (°C) telle que :

| | |
|---|---|
| | T ≤ 200 |
| de préférence | 100 ≤ T ≤ 150 |
| et plus préférentiellement encore | T ≤ 100. |

En pratique, il peut s'agir de la température ambiante, qui est particulièrement économique et facile à mettre en oeuvre, sur le plan industriel. Mais, pour diminuer la viscosité de la phase silicone, il est tout aussi possible de travailler à plus haute température. Le procédé selon l'invention offre beaucoup de flexibilité à cet égard.

Sur le plan quantitatif, la concentration en catalyseur [C] (en moles pour 100 g de POS de départ, par exemple linéaire(s) et/ou cyclique(s)) dans le milieu réactionnel est telle que :

| | |
|---|---|
| | [C] ≤ 1 |
| de préférence | 10⁻⁵ ≤ [C] ≤ 10⁻¹ |
| et plus préférentiellement encore | 10⁻⁵ ≤ [C] ≤ 10⁻³. |

La vitesse de polymérisation par ouverture de cycle et/ou de redistribution, dépend notamment de cette concentration [C].

Selon une variante de l'invention, il est possible d'interrompre la réaction de polymérisation par ouverture de cycle et/ou de redistribution :
- par chauffage du milieu réactionnel, par exemple à une température ≥ 150°C ;
- et/ou par neutralisation du carbène, de préférence à l'aide d'un acide.

S'agissant des POS de départ, ils peuvent comporter des POS cycliques (POScy). Il va de soi que, dans ce cas, la polymérisation s'effectuera par ouverture de cycle(s).
Ces POScy répondent, avantageusement, à la formule générale (XI) suivante : 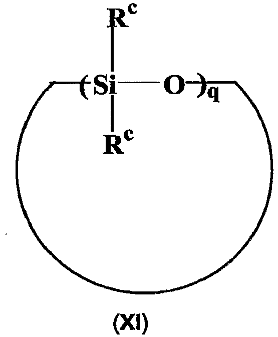 dans laquelle :
R^{c} représente l'hydrogène ou un groupement alkyle, alcényle, aryle, aralkyle, alkylaryle, éventuellement substitué,
et 3 ≤ q ≤ 12.

Dans ces oligocyclosiloxanes, R^{c} est de préférence choisi parmi les groupes alkyle ayant de 1 à 8 atomes de carbone inclus, éventuellement substitués par au moins un atome d'halogène, avantageusement, parmi les groupes méthyle, éthyle, propyle et 3,3,3-trifluoropropyle et ainsi que parmi les groupes aryles et, avantageusement, parmi les radicaux xylyle et tolyle et phényle.
En pratique, il peut s'agir de D₄ ou de D₃, éventuellement vinylé.

Les POS de départ peuvent être linéaires et, dans ce cas, sont avantageusement sélectionnés parmi ceux de formule générale (**XII**.**1**) **:**

**R^{a}-[(R^{b})₂Si-O-]ₚ-Si(R^{b})₂-R^{a}** **(XII.1**)

dans laquelle :
- R^{a} représentent indépendamment un hydroxyle, un alkyle ou un aryle, comprenant éventuellement un ou plusieurs hétéroatomes et éventuellement substitué(s) par des halogènes,
- R^{b} représentent indépendamment un alkyle ou un aryle, comprenant éventuellement un ou plusieurs hétéroatomes et éventuellement substitué(s) par des halogènes,
- et p ≥ 2.
Les POS de départ peuvent également être non linéaires, c'est à dire ramifiés et/ou se présentant sous forme de résines POS comprenant des motifs siloxyle M : -(R)₃SiO_{1/2} et Q : -SiO_{4/2}, et éventuellement D : -(R)₂SiO_{2/2} et/ou T : -RSiO_{3/2}.

Les POS de départ peuvent en outre être formés par des mélanges d'au moins deux des espèces POS suivantes : POSCy, POS linéaires et POS non linéaires.

Dans une forme préférée de mise en oeuvre, les POS de départ comprennent des POScy - de préférence D3, D4, D4 vinylé, D4 hydrogéné - et des POS linéaires, par exemple des polydialkyl(e.g. méthyl)siloxanes MDₚM avec p = 0 à 20, de préférence 0 à 10, et mieux encore p = 0 : à savoir des disiloxanes, par exemple ceux appartenant au groupe comportant l'hexaméthyldisiloxane (M2), le M2 vinylé, le M2 hydrogéné. Naturellement, d'autres groupes fonctionnels pourraient être envisagés pour ces POS linéaires, en particulier pour ces M2, dans des variantes de l'invention.

Le réglage de la viscosité du milieu réactionnel pendant la polymérisation est à la portée de l'homme du métier. Elle peut être effectuée par tous moyens.
Le milieu réactionnel est soumis à des conditions réactionnelles classiques.

Selon une modalité très avantageuse du procédé de l'invention, il est fait en sorte que le rapport final POS/POScy dans le milieu réactionnel est supérieur à 85/15, de préférence supérieur ou égal à 90/10, et, plus préférentiellement encore supérieur ou égal à 95/5.

Suivant des variantes intéressantes, il est envisageable de mettre en oeuvre dans le milieu réactionnel :
o des POS substitués par des fonctions catalytiques, et de préférence des fonctions catalytiques issues de produits de formule **(I°) (I) (I') (II) (II') (III)** ou (III') telles que définies ci-dessus ;
o et/ou des silanes de formule :

   **(OR*)₄₋ₐSi(R^{c})ₐ**

   dans laquelle :
   - R^{c} est une fonction catalytique propre à générer un carbène, et de préférence une fonction catalytique issue d'un produit de formule **(I°) (I) (I') (II) (II') (III)** ou **(III')** telles que définies ci-dessus,
   - R* est un alkyle,
   - a = 1 à 3.

Le procédé selon l'invention intègre également, au besoin, des étapes conventionnelles de neutralisation et/ou récupération/purification des POS visés.

Selon un autre de ses aspects, l'invention concerne une composition utilisable notamment pour la préparation de PolyOrganoSiloxanes (POS) par polymérisation par ouverture de cycle(s) et/ou par redistribution de POS, caractérisée en ce qu'elle comprend :
* des POS linéaires ou non et/ou des POS cycliques (POScy) ;
* un catalyseur (C) comprenant au moins un carbène dans lequel les deux électrons non-liants sont, de préférence, sous la forme singulet ; à l'exclusion de tout catalyseur formé par au moins un complexe métal (ou métaux) / carbène(s), en particulier Pt/carbène(s) ;
* éventuellement au moins un solvant ;
* et éventuellement des POS linéaires, par exemple des polydialkyl(e.g.méthyl)siloxanes MDₚM avec p = 0 à 20, de préférence 0 à 10, et mieux encore p = 0 : à savoir des disiloxanes, par exemple ceux appartenant au groupe comportant l'hexaméthyldisiloxane (M2), le M2 vinylé, le M2 hydrogéné. Naturellement, d'autres groupes fonctionnels pourraient être envisagés pour ces POS linéaires, en particulier pour ces M2, dans des variantes de l'invention.

Cette composition est celle d'un milieu réactionnel perfectionné selon l'invention. Ce milieu permet d'obtenir aisément, efficacement et économiquement des POS, par polymérisation par ouverture de cycle si les POS de départ sont des POScy et / ou par redistribution.
Ce milieu est notamment celui propre au procédé conforme à l'invention, tel que décrit ci-dessus.
D'où il s'ensuit que l'on se référera dans ce qui suit à cette description, pour définir les composants de la composition réactionnelle selon l'invention.
Il en est donc ainsi pour le catalyseur (C), les POS de départ et la (ou les) base(s)-initiateur(s) qui sont tels que définis supra.

S'agissant du catalyseur (C), il peut être généré in-situ à partir d'au moins un précurseur choisi dans le groupe comprenant un ou plusieurs sel(s) correspondant(s) au(x) carbène(s), apte(s) à réagir avec au moins une base, de manière à générer in-situ le (ou les) carbène(s).

La composition peut avantageusement comporter au moins un auxiliaire de solubilisation et/ou le (ou les) carbène(s) peut(vent) être substitué(s) par au moins un groupement solubilisant. Pour plus de détails sur ces moyens de solubilisation, on se reportera à la description qui en est faite ci-dessus, en relation avec le procédé de synthèse de POS.
De préférence, la concentration en catalyseur [C] (en moles pour 100 g de POS de départ, par exemple, linéaire(s) et/ou cyclique(s)) dans le milieu réactionnel est telle que :

| | |
|---|---|
| | [C] ≤ 1 |
| de préférence | 10⁻⁵ ≤ [C] ≤ 10⁻¹ |
| et plus préférentiellement encore | 10⁻⁵ ≤ [C] ≤ 10⁻³. |

Sur le plan quantitatif et à titre d'exemple, une composition POS réactionnelle de départ selon l'invention, peut être la suivante :
◆ 500 g de POS et/ou de POScy (e.g. D4) ;
◆ 0 à 10 g, de préférence 0,5 à 2 g, de stoppeur de chaîne (e.g. M2) ;
◆ 0 à 10 g, de préférence 0,01 à 1 g, de sel précurseur de carbène (formules **(III)** ou (**III**') e.g. : sel d'imidazolium) ;
◆ 0 à 10 g, de préférence 0,01 à 0,5 g, de base, (e.g. : t-Bu-OK) ;
◆ 0,1 à 10 mL de solvant (e.g. THF).

Le procédé selon l'invention permet d'obtenir une composition silicone riche en au moins un POS obtenu par polymérisation par ouverture de cycle(s) et/ou redistribution de POS, avec ouverture de cycle (ROP) dans le cas où au moins une partie des POS sont des POScy, caractérisée en ce qu'elle comprend du catalyseur (C) tel que défini ci-dessus.

Le procédé selon l'invention permet également d'obtenir une composition silicone comprenant au moins un POS obtenu par ouverture de cycles puis polymérisation par ouverture de cycle(s)/redistribution de POScy, caractérisée par un rapport POS / POScy supérieur à 85 / 15, de préférence supérieur ou égal à 90 / 10, et, plus préférentiellement encore supérieur ou égal à 95 / 5.
Ces compositions, que l'on peut qualifiées de "finales", correspondent, entre autres, à celles obtenues à l'issue du procédé de préparation de POS tel que décrit ci-dessus ou à celles obtenues à partir de la composition réactionnelle visée de manière indépendante dans le cadre de l'invention et décrite elle aussi ci-dessus.

Dans ces compositions finales, des résidus de catalyseur "carbénique" peuvent être présent à l'état de traces. De même certains autres composants de la composition réactionnelle susvisée peuvent se retrouver dans ces compositions finales.

L'invention concerne également, à titres de produits nouveaux :
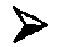 des POS substitués par des fonctions propres à générer des carbènes, issues de produits de formule (II), (II'), (III) ou (III') avec A et B représentant respectivement C et N, N et C ou N et N, telles que définies ci-dessus ;
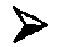 et des silanes de formule :

   **(OR*)₄₋ₐSi(R^{c})ₐ**

   dans laquelle :
   o R^{c} est un groupement catalytique propre à générer un carbène, et issu d'un produit de formule (II), (II'), (III) ou (III') avec A et B représentant respectivement C et N, N et C ou N et N, telles que définies ci-dessus,
   o R* est un alkyle,
   o a = 1 à 3.

L'invention ouvre une nouvelle voie dans la catalyse de polymérisation par ouverture de cycle(s) et/ou redistribution de POS et/ou de POScy (ROP), en présence de carbènes ou de précurseurs de carbènes, pour la préparation de POS.
Cette voie est performante en termes d'activité catalytique, de sélectivité (meilleurs taux de transformation et rendement POS/POScy > 90/10), de facilité de mise en oeuvre (basse température, pas ou peu de purification), d'obtention de POS ayant de bons indices de polymolécularité et pouvant avoir de fortes viscosités, entre autres.
Ces performances sont d'autant plus intéressantes qu'elles sont obtenues sans sacrifier aux impératifs de coût, de sécurité, de non écotoxicité et de facilité de mise en oeuvre.
Les exemples qui suivent permettront de mieux appréhender le procédé et le catalyseur selon l'invention, en faisant ressortir tous leurs avantages et les variantes possibles de mises en oeuvre.

### EXEMPLES

### Généralités :

Le sel d'imidazolium précurseur 1 est préparé selon le protocole opératoire classique décrit dans la littérature en utilisant HBF4 comme acide de Brönstedt. Il possède la structure suivante :

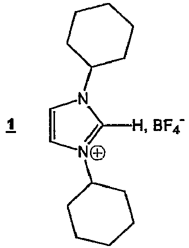

Les autres matières premières sont disponibles commercialement.

### Exemple 1

Dans un flacon de 30 mL, sont mélangés 10 g d'octaméthylcyclotetrasiloxane (D4) et 100 mg d'hexaméthyldisiloxane (M2).
Dans un tube pèse matière, sont placés 100 mg de sel d'imidazolium 1 (0,34 mmol) et 39 mg de t-BuOK (0,34 mmol). 0,5 mL de THF anhydre sont ajoutés et la suspension obtenue est rapidement additionnée dans le flacon contenant le M2 et le D4.
Le mélange réactionnel est agité à température ambiante 24 h. Il devient progressivement visqueux et une analyse par RMN du silicium montre que 95% du D4 a polymérisé et se retrouve sous la forme d'une chaîne polysiloxanique.

### Exemple 2

Dans un flacon de 30 mL, sont mélangés 10 g d'octaméthylcyclotetrasiloxane (D4) et 100 mg d'hexaméthyldisiloxane (M2).
Dans un tube pèse matière, sont placés 100 mg de sel d'imidazolium 1 (0,34 mmol) et 39 mg de t-BuOK (0,34 mmol). 0,5 mL de THF anhydre sont ajoutés et la suspension obtenue est rapidement additionnée dans le flacon contenant le M2 et le D4.
Le mélange réactionnel est agité à 60°C pendant 2 h. Il devient progressivement visqueux et une analyse par RMN du silicium montre que 95% du D4 a polymérisé et se retrouve sous la forme d'une chaîne polysiloxanique.

### Contre-Exemple 1

Dans un flacon de 30 mL, sont mélangés 10 g d'octaméthylcyclotetrasiloxane (D4) et 100 mg d'hexaméthyldisiloxane (M2).
Dans un tube pèse matière, sont placés 39 mg de t-BuOK (0,34 mmol). 0,5 mL de THF anhydre sont ajoutés et la suspension obtenue est rapidement additionnée dans le flacon contenant le M2 et le D4.
Le mélange réactionnel est agité à température ambiante 24 h. Il reste très fluide et l'analyse par RMN du silicium montre que moins de 5% du D4 a polymérisé.

### Contre-Exemple 2

Dans un flacon de 30 mL, sont mélangés 10 g d'octaméthylcyclotetrasiloxane (D4) et 100 mg d'hexaméthyldisiloxane (M2).
Dans un tube pèse matière, sont placés 39 mg de t-BuOK (0,34 mmol). 0,5 mL de THF anhydre sont ajoutés et la suspension obtenue est rapidement additionnée dans le flacon contenant le M2 et le D4.
Le mélange réactionnel est agité à 60°C pendant 2 h. Il devient un peu plus visqueux et une analyse par RMN du silicium montre que seulement 30% du D4 a polymérisé pour se retrouver sous la forme d'une chaîne polysiloxanique.

### Discussions :

Les exemples précédents montrent qu'il est possible de polymériser l'octaméthyltétracyclosiloxane (D4), en présence d'un limiteur de chaîne (le avec des catalyseurs type diamino carbène à température ambiante et en température. Le taux de conversion du D4 est supérieur ou égal à 95% par rapport à la quantité initiale. La structure du polyorganosiloxane obtenue est identique à celle d'une huile type H47.

## Revendications

1. Procédé de préparation de PolyOrganoSiloxanes (POS) par polymérisation par ouverture de cycle et/ou par redistribution de POS, en présence d'un catalyseur (C) **caractérisé en ce que** ce catalyseur (C) comprend au moins un carbène.

2. Procédé selon la revendication 1, **caractérisé en ce que** le carbène du catalyseur (C) comporte deux électrons non-liants, qui sont sous la forme singulet ou triplet, de préférence singulet.

3. Procédé selon l'une quelconque des revendications précédentes, **caractérisé en ce que** le (ou les) carbène(s) du catalyseur (C) possède(nt) une structure générale représentée par la formule (I°) : 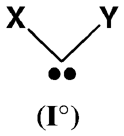 dans laquelle :
▪ X et Y sont indépendamment choisis dans le groupe comprenant : S, P, Si, N et O ;
▪ X et Y sont éventuellement substitués ;
▪ X et Y peuvent être reliés par au moins un cycle hydrocarboné à cinq, six ou sept chaînons éventuellement substitué ; ou bien un hétérocycle à cinq, six ou sept chaînons comprenant un ou plusieurs hétéroatomes choisis dans le groupe comprenant : S, P, Si, N et O, et éventuellement substitué(s).

4. Procédé selon la revendication 3, **caractérisé en ce que** le (ou les) carbène(s) du catalyseur (C) possède(nt) une structure générale représentée par les formules (I), (I') ou (**I**") **:** 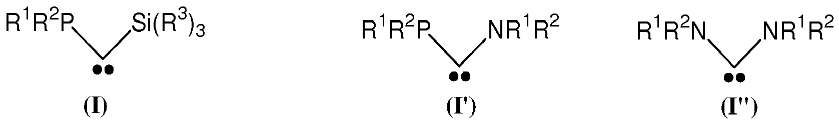 dans lesquelles :
- R¹, R² et R³ identiques ou différents représentent indépendamment un groupement alkyle ; cycloalkyle éventuellement substitué ; aryle éventuellement substitué ; ou bien
- les substituants R¹ et R² peuvent former ensemble un cycle hydrocarboné à cinq ou six chaînons éventuellement substitué(s) ; ou bien un hétérocycle à cinq ou six chaînons comprenant un ou plusieurs hétéroatomes choisis dans le groupe comprenant : S, P, Si, N et O, et éventuellement substitué(s).

5. Procédé selon la revendication 3, **caractérisé en ce que** le (ou les) carbène(s) du catalyseur (C) réponde(nt) à la formule (**II**) ou (**II**') : 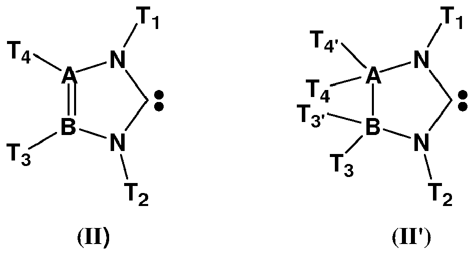 dans laquelle :
- A et B représentent indépendamment C ou N, étant entendu que :
• dans la formule (II), lorsque A représente N, alors T4 n'est pas présent et lorsque B représente N, alors T3 n'est pas présent ;
• dans la formule (II'), lorsque A représente N, alors T4 ou T4' n'est pas présent et lorsque B représente N, alors T3 ou T3' n'est pas présent ;
- T3, T3', T4 et T4' représentent indépendamment un atome d'hydrogène ; un groupement alkyle ; cycloalkyle éventuellement substitué par alkyle ou alkoxy ; aryle éventuellement substitué par alkyle ou alkoxy ; alcényle ; alcynyle ; ou arylalkyle dans lequel la partie aryle est éventuellement substituée par alkyle ou alkoxy ; ou bien
- T3 et T4 peuvent former ensemble et avec A et B quand ceux-ci représentent chacun un atome de carbone, un aryle étant entendu que dans ce cas T3' et T4' ne sont pas présent ;
- T1 et T2 représentent indépendamment un groupement alkyle ; un groupement alkyle éventuellement substitué par alkyle ; un groupement alkyle perfluoré ou éventuellement substitué par un groupement perfluoroalkyle ; cycloalkyle éventuellement substitué par alkyle ou alkoxy ; aryle éventuellement substitué par alkyle ou alkoxy ; alcényle ; alcynyle ; ou arylalkyle dans lequel la partie aryle est éventuellement substituée par alkyle ou alkoxy ; ou bien T1 et T2 représentent indépendamment un radical monovalent de formule **(V)** suivante :
-**V1**-**V2 (V)**
dans laquelle :
• V1 est un groupement divalent hydrocarboné saturé ou non, de préférence un alkylène linéaire ou ramifié en C1-C10, éventuellement substitué,
• V2 est un groupement monovalent choisi dans le groupe des substituants suivants :
◆ alcoxy, -OR^{a} avec R^{a} correspondant à hydrogène, alkyle, aryle ;
◆ silyl, -Si(OR^{b})ₓ(R^{c})₃₋ₓ avec R^{b} correspondant à hydrogène, alkyle, silyle ou siloxanyle, R^{c} correspondant à alkyle, aryle et x étant un entier compris entre 0 et 3 ;
◆ amine, de préférence -N(R^{a})₂ avec R^{a} correspondant à hydrogène, alkyle, aryle ; ou bien encore ;
- les substituants T1, T2, T3, T3' T4 et T4' peuvent former deux à deux, lorsqu'ils sont situés sur deux sommets adjacents dans les formules (II) et (II'), une chaîne hydrocarbonée saturée ou insaturée.

6. Procédé selon l'une quelconque des revendications précédentes, **caractérisé en ce que** le (ou les) carbène(s) :
• est (sont) préparé(s) séparément,
• et/ou est (sont) généré(s) in-situ à partir d'au moins un précurseur.

7. Procédé selon la revendication 6, **caractérisé en ce que** le (ou les) précurseur(s) est (sont) un sel(s) correspondant(s) au(x) carbène(s), qui est (sont) mis à réagir avec au moins une base, de manière à générer in-situ le (ou les) carbène(s).

8. Procédé selon la revendication 6, **caractérisé en ce que** le (ou les) sel(s) correspondant(s) est (sont) un (ou des) sel(s) hétérocyclique(s) correspondant(s) de formules générales (**III**) ou (**III**') **:** 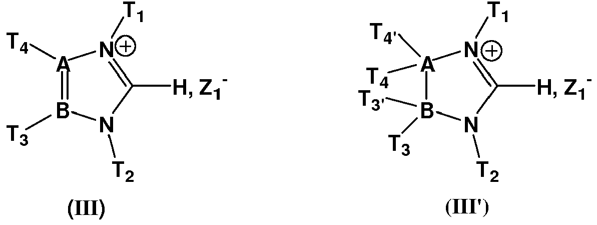 dans lesquelles :
- A, B, T1, T2, T3, T3', T4 et T4' sont tels que définis dans la revendication 5 ;
- Z1 représente indépendamment un anion dérivé d'un acide de Brönsted (acide protique) de préférence choisi dans le groupe comprenant :
• les acides carboxyliques de formule G_{O}-COOH dans laquelle G_{O} représente un alkyle, et avantageusement un alkyle en C1-C22 ; un aryle, avantageusement un aryle en C6-C18 éventuellement substitué par un ou plusieurs alkyle en C1-C6 ;
• les acides sulfoniques de formule G_{O}-SO₃H dans laquelle G_{O} est tel que défini ci-dessus ;
• les acides phosphoriques de formule G_{O}-PO₃H dans laquelle G_{O} est tel que défini ci-dessus ;
• les acides minéraux suivants : HF, HCl, HBr, HI, H₂SO₄, H₃PO₄, HClO₄ et HBF₄ pris à eux seuls ou en combinaison entre eux ;
• et leurs mélanges.

9. Procédé selon l'une quelconque des revendications précédentes, **caractérisé en ce qu'**il est mis en oeuvre, en catalyse homogène, dans un milieu réactionnel liquide dans lequel sont au moins partiellement solubilisés le catalyseur (C) à base de carbène(s) et/ou son (ou ses) précurseur(s) et les POS de départ, et éventuellement au moins une base.

10. Procédé selon l'une quelconque des revendications précédentes, **caractérisé en ce que** l'on contrôle la solubilité du catalyseur (C) à base de carbène(s) et/ou de son (ou ses) précurseur(s), à l'aide d'au moins un auxiliaire de solubilisation et/ou en utilisant un (ou des) carbène(s) substitué(s) par au moins un groupement approprié.

11. Procédé selon l'une quelconque des revendications précédentes, **caractérisé en ce qu'**il est essentiellement réalisé à une température T (°C) telle que :
| | |
|---|---|
| | T ≤ 200 |
| de préférence | 100 ≤ T ≤ 150 |
| et plus préférentiellement encore | T ≤ 100. |

12. Procédé selon la revendication 1, **caractérisé en ce que** la concentration en catalyseur [C] (en moles pour 100 g de POS de départ) dans le milieu réactionnel est telle que :
| | |
|---|---|
| | [C] ≤ 1 |
| de préférence | 10⁻⁵ ≤ [C] ≤ 10⁻¹ |
| et plus préférentiellement encore | 10⁻⁵ ≤ [C] ≤ 10⁻³. |

13. Procédé selon l'une quelconque des revendications précédentes, **caractérisé en ce que** les POS de départ comportent des POS cycliques (POScy), de préférence choisis parmi ceux répondant à la formule générale **(XI)** suivante : 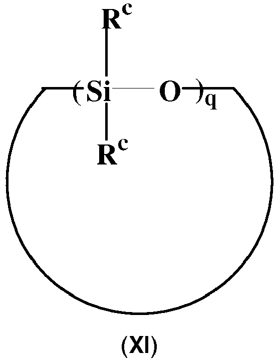 dans laquelle :
R^{c} représente l'hydrogène ou un radical alkyle ou aryle
et 3 ≤ q ≤ 12.

14. Procédé selon l'une quelconque des revendications précédentes, **caractérisé en ce que** les POS de départ sont linéaires et sont, de préférence, sélectionnés parmi ceux de formule générale **(XII.1)** :
**R^{a}-[(R^{b})₂Si-O-]ₚ-Si(R^{b})₂-R^{a}** **(XII.1**)
dans laquelle :
- R^{a} représentent indépendamment un hydroxyle, un alkyle ou un aryle, comprenant éventuellement un ou plusieurs hétéroatomes et éventuellement substitué(s) par des halogènes,
- R^{b} représentent indépendamment un alkyle ou un aryle, comprenant éventuellement un ou plusieurs hétéroatomes et éventuellement substitué(s) par des halogènes,
- et p ≥ 2.

15. Procédé selon la revendication 14 et éventuellement au moins l'une quelconque des autres revendications précédentes, **caractérisé en ce que** le rapport final POS/POScy dans le milieu réactionnel est supérieur à 85/15, de préférence supérieur ou égal à 90/10, et, plus préférentiellement encore supérieur ou égal à 95/5.

16. Procédé selon l'une quelconque des revendications précédentes, **caractérisé en ce que** l'on met en oeuvre :
o des POS substitués par des fonctions catalytiques propres à générer des carbènes, et de préférence des fonctions catalytiques issues de produits de formules (**I**°), **(I),** (**I**'), (**II**), (**II**'), (**III**) ou (**III**') telles que définies dans les revendications précédentes ;
o et/ou des silanes de formule : **(OR*)₄₋ₐSi(R^{c})ₐ,**
dans laquelle :
• R^{c} est une fonction catalytique propre à générer un carbène, et de préférence une fonction catalytique issue d'un produit de formule (**I**°), **(I),** (**I**'), (**II**), (**II**'), (**III**) ou (**III'**) telles que définies dans les revendications précédentes,
• R* est un alkyle,
• a = 1 à 3.

17. Composition utilisable notamment pour la préparation de PolyOrganoSiloxanes (POS) par polymérisation et/ou redistribution de POS, **caractérisée en ce qu'**elle comprend :
* des POS linéaires ou non et/ou des POS cycliques (POScy),
* un catalyseur (C) comprenant au moins un carbène dans lequel les deux électrons non-liants sont, de préférence, sous la forme singulet ; à l'exclusion de tout catalyseur formé par au moins un complexe métal (ou métaux) / carbène(s), en particulier Pt / carbène(s),
* éventuellement au moins un solvant,
* et éventuellement des POS linéaires, par exemple des polydialkyl(e.g.méthyl)siloxanes MDₚM avec p = 0 à 20, de préférence 0 à 10, et mieux encore p = 0 : à savoir des disiloxanes, par exemple ceux appartenant au groupe comportant l'hexaméthyldisiloxane (M2), le M2 vinylé, le M2 hydrogéné.

18. Composition selon la revendication 17, **caractérisée en ce que** le catalyseur (C) est tel que défini dans la revendication 2 à 8.

19. Composition selon la revendication 18 ou 19, **caractérisée en ce que** les POS de départ sont tels que définis dans la revendication 13 ou 14.

20. Composition selon l'une quelconque des revendications 17 à 19, **caractérisée en ce que** le catalyseur (C) est généré in-situ à partir d'au moins un précurseur choisi dans le groupe comprenant un ou plusieurs sel(s) correspondant(s) au(x) carbène(s), apte(s) à réagir avec au moins une base, de manière à générer in-situ le (ou les) carbène(s).

21. Composition selon l'une quelconque des revendications 17 à 20 **caractérisée en ce qu'**elle comporte au moins un auxiliaire de solubilisation et/ou le (ou les) carbène(s) est (sont) substitué(s) par au moins un groupement solubilisant.

22. Composition selon l'une quelconque des revendications 19 à 21 **caractérisée en ce que** la concentration en catalyseur [C] (en moles pour 100 g de POS de départ) dans le milieu réactionnel est telle que :
| | |
|---|---|
| | [C] ≤ 1 |
| de préférence | 10⁻⁵ ≤ [C] ≤ 10⁻¹ |
| et plus préférentiellement encore | 10⁻⁵ ≤ [C] ≤ 10⁻³. |

23. POS substitués par des fonctions catalytiques propres à générer des carbènes, issues de produits de formules (II), (II'), (III) ou (III') telles que définies dans les revendications 5 et 8 où, dans les formules (II), (II'), (III) et (III'), A et B représentent respectivement C et N, N et C ou N et N.

24. Silanes de formule :
**(OR*)₄₋ₐSi(R^{c})ₐ.**
dans laquelle :
o R^{c} est une fonction catalytique propre à générer un carbène issue d'un produit de formules **(II), (II'), (III)** ou **(III')** telles que définies dans les revendications 5 et 8 où, dans les formules (II), (II'), (III) et (III'), A et B représentent respectivement C et N, N et C ou N et N,
o R* est un alkyle,
o a = 1 à 3.

25. Utilisation de carbène(s) tels que définis dans les revendications précédentes comme catalyseur ou co-catalyseur dans la préparation de POS par polymérisation et/ou redistribution de POS.

## Patentansprüche

1. Verfahren zur Herstellung von Polyorganosiloxanen (POS) durch Polymerisation durch Zykluseinleitung und/oder durch Umverteilung von POS in Anwesenheit eines Katalysators (C), **dadurch gekennzeichnet, dass** dieser Katalysator (C) mindestens ein Carben umfasst.

2. Verfahren gemäß Anspruch 1, **dadurch gekennzeichnet, dass** das Carben des Katalysators (C) zwei nichtbindende Elektronen in Singlett- oder Triplett-Form, vorzugsweise in Singlett-Form, enthält.

3. Verfahren gemäß einem der vorstehenden Ansprüche, **dadurch gekennzeichnet, dass** das (oder die) Carben(e) des Katalysators (C) eine allgemeine, durch die Formel (I°) repräsentierte Struktur besitzt(besitzen): 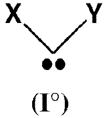 In der:
- X und Y unabhängig ausgewählt werden in der Gruppe, die Folgendes umfasst: S, P, Si, N und O;
- X und Y werden gegebenenfalls substituiert;
- X und Y können durch mindestens einen Kohlenwasserstoffzyklus mit fünf, sechs oder sieben eventuell subsituierten Gliedern verbunden sein; oder einen Heterozyklus mit fünf, sechs oder sieben Gliedern mit einem oder mehreren Heteroatomen, die aus der Gruppe ausgewählt werden, die Folgendes umfasst: S, P, Si, N und O, eventuell substituiert.

4. Verfahren gemäß Anspruch 3, **dadurch gekennzeichnet, dass** das (oder die) Carben(e) des Katalysators (C) eine allgemeine, durch die Formel (I), (I') oder (I") repräsentierte Struktur besitzt (besitzen): 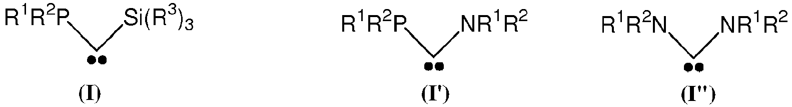 In denen:
- Identische oder unterschiedene R¹, R² und R³ unabhängig eine Alkylgruppierung repräsentieren; eventuell substituiertes Cycloalkyl; eventuell substituiertes Aryl; oder
- Die Substituenten R¹ und R² können gemeinsam einen Kohlenwasserstoffzyklus mit fünf oder sechs eventuell subsituierten Gliedern bilden; oder einen Heterozyklus mit fünf oder sechs Gliedern mit einem oder mehreren Heteroatomen, die aus der Gruppe ausgewählt werden, die Folgendes umfasst: S, P, Si, N und O, eventuell substituiert.

5. Verfahren gemäß Anspruch 3, **dadurch gekennzeichnet, dass** das (oder die) Carben(e) des Katalysators (C) der Formel (II) oder (II') entspricht (entsprechen): 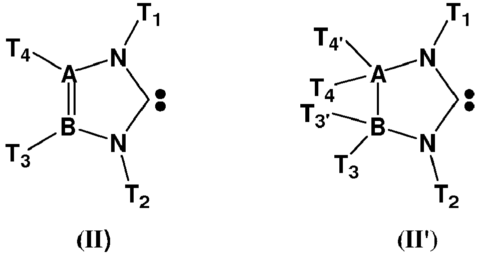 In der:
- A und B unabhängig C oder N repräsentieren, wobei:
- In der Formel (II), wenn A N repräsentiert, T4 nicht vorhanden ist und wenn B N repräsentiert, T3 nicht vorhanden ist;
- in der Formel (II'), wenn A N repräsentiert, T4 oder T4' nicht vorhanden ist und wenn B N repräsentiert, T3 oder T3' nicht vorhanden ist;
- T3, T3' und, T4 und T4' unabhängig ein Wasserstoffatom repräsentieren; eine Alkylgruppierung; eventuell durch Alkyl oder Alkoxy substituiertes Cycloalkyl; eventuell durch Alkyl oder Alkoxy substituiertes Aryl; Alkenyl; Alkinyl; oder Arylalkyl, in dem der Arylteil eventuell durch Alkyl oder Alkoxy substituiert ist; oder
- T3 und T4 können gemeinsam und mit A und B, wenn diese jeweils ein Kohlenstoffatom repräsentieren, ein Aryl bilden, wobei in diesem Fall T3' und T4' nicht vorhanden sind;
- T1 und T2 unabhängig eine Alkylgruppierung repräsentieren; eine eventuell durch Alkyl substituierte Alkylgruppierung; eine perfluorierte oder eventuell durch eine Perfluoroalkylgruppe substituierte Alkylgruppe; eventuell durch Alkyl oder Alkoxy substituiertes Cycloalkyl; eventuell durch Alkyl oder Alkoxy substituiertes Aryl; Alkenyl; Alkinyl; oder Arylalkyl, in dem der Arylteil eventuell durch Alkyl oder Alkoxy substituiert ist; oder T1 und T2 repräsentieren unabhängig ein monovalentes Radikal der folgenden Formel (V):
-V1-V2 (V)
In der:
- V1 eine gesättigte oder nicht gesättigte eventuell substituierte divalente Kohlenwasserstoffgruppierung ist, vorzugsweise ein lineares oder verzweigtes C1-C10-Alkylen,
- V2 eine aus der folgenden Substituentengruppe ausgewählte monovalente Gruppierung ist:
- Alcoxy, -OR^{a} wobei R^{a} Wasserstoff, Alkyl, Aryl ist;
- Silyl, -Si(OR^{b})ₓ(R^{c})_{3-X} wobei R^{b} Wasserstoff, Alkyl, Silyl oder Siloxanyl ist, wobei R^{c} Alkyl, Aryl ist und wobei x ein Ganzes zwischen 0 und 3 ist;
- Amin, vorzugsweise -N(R^{a})₂ wobei R^{a} Wasserstoff, Alkyl, Aryl ist; oder;
- Die Substituenten T1, T2, T3, T3', T4 und T4' können, wenn sie sich in den Formeln (II) und (II') auf zwei benachbarten Gipfeln befinden, jeweils zu zweit eine gesättigte oder ungesättigte Kohlenstoffkette bilden.

6. Verfahren gemäß einem der vorstehenden Ansprüche, **dadurch gekennzeichnet, dass** das (die) Carben(e):
- Getrennt hergestellt wird (werden),
- und/oder in-situ aus mindestens einem Vorläufer erzeugt wird (werden).

7. Verfahren gemäß Anspruch 6, **dadurch gekennzeichnet, dass** der (oder die) Vorläufer ein dem Carben (den Carbenen) entsprechendes Salz ist (sind), das (die) hinzugenommen wird (werden), um mit mindestens einer Basis derart zu reagieren, dass das Carben (oder die Carbene) in-situ erzeugt wird (werden).

8. Verfahren gemäß Anspruch 6, **dadurch gekennzeichnet, dass** das entsprechende Salz (oder die entsprechenden Salze) ein heterozyklisches Salz (heterozyklische Salze) ist (sind), das (die) der allgemeinen Formel (III) oder (III') entspricht (entsprechen): 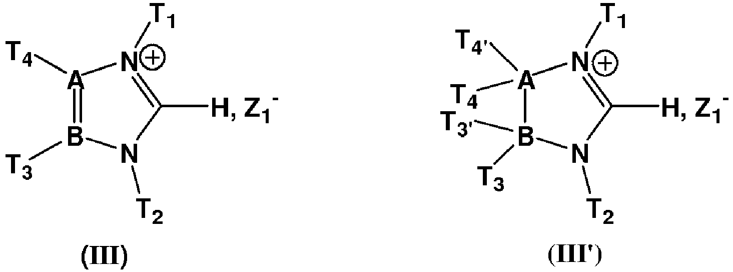 In denen:
- A, B, T1, T2, T3, T3', T4 und T4' wie in Anspruch 5 definiert lauten;
- Z1 unabhängig ein Anionderivat einer Brönsted-Säure (protischen Säure) repräsentiert, die vorzugsweise aus der Folgendes umfassenden Gruppe ausgewählt wird:
- Carbonsäuren der Formel Gₒ-COOH, in der Gₒ ein Alkyl und vorteilhafterweise ein C1-C22-Alkyl repräsentiert; ein Aryl, vorteilhafterweise ein C6-C18-Aryl, das eventuell durch ein oder mehrere C1-C6-Alkyle substituiert ist;
- Sulfonsäuren der Formel Gₒ-SO₃H, in der Gₒ wie oben definiert lautet;
- Phosphorsäuren der Formel Gₒ-PO₃H, in der Gₒ wie oben definiert lautet;
- Folgende Mineralsäuren: HF, HCl, HBr, Hi, H₂SO₄, H₃PO₄, HClO₄ und HBF₄ allein oder in Verbindung miteinander hinzugenommen werden;
- und ihre Mischungen.

9. Verfahren gemäß einem der vorstehenden Ansprüche, **dadurch gekennzeichnet, dass** es als homogene Katalyse in einem flüssigen Reaktionsmedium durchgeführt wird, in dem der Carbenkatalysator (C) und/oder sein (oder seine) Vorläufer und die Ausgangs-POS und eventuell mindestens eine Basis zumindest teilweise löslich gemacht sind.

10. Verfahren gemäß einem der vorstehenden Ansprüche, **dadurch gekennzeichnet, dass** die Löslichkeit des Carbenkatalysators (C) und/oder seines (seiner) Vorläufer mit mindestens einer Lösungshilfe und/oder unter Verwendung eines (oder von) Carbens(en), das (die) durch mindestens eine entsprechende Gruppierung substituiert wird (werden), kontrolliert wird.

11. Verfahren gemäß einem der vorstehenden Ansprüche, **dadurch gekennzeichnet, dass** es im Wesentlichen bei einer Temperatur T (°C) wie folgende Temperatur durchgeführt wird:
T ≤ 200
vorzugsweise 100 ≤ T ≤ 150
und besonders bevorzugt T ≤ 100.

12. Verfahren gemäß Anspruch 1, **dadurch gekennzeichnet, dass** die Katalysatorkonzentration [C] (in Mol für 100 g Ausgangs-POS) im Reaktionsmedium folgendermaßen lautet:
[C] ≤ 1
vorzugsweise 10⁻⁵ ≤ [C] ≤ 10⁻¹
und besonders bevorzugt 10⁻⁵ ≤ [C] < 10⁻³.

13. Verfahren gemäß einem der vorstehenden Ansprüche, **dadurch gekennzeichnet, dass** die Ausgangs-POS zyklische POS (POScy) enthalten, die vorzugsweise aus denjenigen ausgewählt werden, die der folgenden allgemeinen Formel (XI) entsprechen: 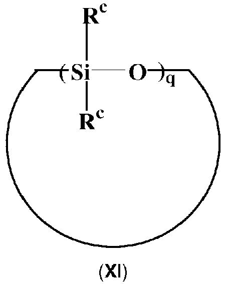 In der:
R_{c} Wasserstoff oder ein Alkyl- oder Arylradikal repräsentiert und 3 ≤ q ≤ 12.

14. Verfahren gemäß einem der vorstehenden Ansprüche, **dadurch gekennzeichnet, dass** die Ausgangs-POS lineare POS sind, die vorzugsweise aus denjenigen der allgemeinen Formel (XII.1) ausgewählt werden:
**R^{a}-[(R^{b})₂Si-O-]ₚ-Si(R^{b})₂-R^{a}** **(XII.1)**
In der:
- R^{a} unabhängig ein Hydroxyl, Alkyl oder Aryl repräsentiert, das eventuell ein oder mehrere Heteroatome umfasst, das (die) eventuell durch Halogene substituiert wird (werden),
- R^{b} unabhängig ein Alkyl oder Aryl repräsentiert, das eventuell ein oder mehrere Heteroatome umfasst, das (die) eventuell durch Halogene substituiert wird (werden),
- und p ≥ 2.

15. Verfahren gemäß Anspruch 14 und eventuell mindestens einem der anderen vorstehenden Ansprüche, **dadurch gekennzeichnet, dass** das Endverhältnis POS/POScy im Reaktionsmedium mehr als 85/15, vorzugsweise 90/10 oder mehr und besonders bevorzugt 95/5 oder mehr beträgt.

16. Verfahren gemäß einem der vorstehenden Ansprüche **dadurch gekennzeichnet, dass** Folgendes durchgeführt wird:
- POS, die durch katalytische Eigenfunktionen zur Carbenerzeugung und vorzugsweise durch katalytische Funktionen aus Produkten der Formel (I°), (I), (I'), (II), (II'), (III) oder (III') wie in den vorstehenden Ansprüchen definiert substituiert werden;
- und/oder Silane der Formel: (OR*)₄₋ₐSi(R^{c})ₐ, in der:
- R_{c} eine katalytische Eigenfunktion zur Carbenerzeugung und vorzugsweise eine katalytische Funktion eines Produkts der Formel (I°), (I), (I'), (II), (II'), (III) oder (III') wie in den vorstehenden Ansprüchen definiert ist,
- R* ein Alkyl ist,
- a = 1 bis 3.

17. Zusammensetzung, die insbesondere zur Herstellung von Polyorganosiloxanen (POS) durch Polymerisation und/oder Umverteilung von POS verwendbar ist, **dadurch gekennzeichnet, dass** sie Folgendes umfasst:
- Lineare POS oder nicht und/oder zyklische POS (POScy),
- einen Katalysator (C) mit mindestens einem Carben, in dem die beiden nichtbindenden Elektronen vorzugsweise eine Singlett-Form aufweisen; ausgenommen Katalysatoren, die durch mindestens einen Metallkomplex (oder Metalle)/Carben(e), insbesondere Pt/Carben(e), gebildet werden,
- eventuell mindestens ein Lösungsmittel,
- und eventuell lineare POS, beispielsweise Polydialkylsiloxane(z. B. Methylsiloxane) MDₚM mit p = 0 bis 20, vorzugsweise 0 bis 10 und besonders bevorzugt p = 0: Das heißt Disiloxane, beispielsweise der Gruppe mit dem Hexamethyldisiloxan (M2), Vinyl-M2, Wasserstoff-M2.

18. Zusammensetzung gemäß dem Anspruch 17, **dadurch gekennzeichnet, dass** der Katalysator (C) wie in Anspruch 2 bis 8 definiert ist.

19. Zusammensetzung gemäß Anspruch 18 oder 19, **dadurch gekennzeichnet, dass** die Ausgangs-POS wie in Anspruch 13 oder 14 definiert sind.

20. Zusammensetzung gemäß einem der Ansprüche 17 bis 19, **dadurch gekennzeichnet, dass** der Katalysator (C) in-situ aus mindestens einem Vorläufer erzeugt wird, der aus der Gruppe mit einem oder mehreren Salz(en) ausgewählt wird, das (die) dem (den) Carben(en) entspricht (entsprechen), das (die) mit mindestens einer Basis derart reagieren kann (können), dass das (oder die) Carben(e) in-situ erzeugt wird (werden).

21. Zusammensetzung gemäß einem der Ansprüche 17 bis 20 **dadurch gekennzeichnet, dass** sie mindestens eine Lösungshilfe und/oder das (oder die) Carben(e) enthält, das (die) durch mindestens eine Lösungsgruppe substituiert wird (werden).

22. Zusammensetzung gemäß einem der Ansprüche 19 bis 21, **dadurch gekennzeichnet, dass** die Katalysatorkonzentration [C] (in Mol für 100 g Ausgangs-POS) im Reaktionsmedium folgendermaßen lautet:
[C] ≤ 1
vorzugsweise 10⁻⁵ ≤ [C] < 10⁻¹
und besonders bevorzugt 10⁻⁵ ≤ [C] < 10⁻³.

23. Durch katalytische Eigenfunktionen zur Carbenerzeugung substituierte POS aus Produkten der Formel (II), (II'), (III) oder (III') wie in den Ansprüchen 5 und 8 definiert sind, wobei, in den Formeln (II), (II'), (III) und (III'), A und B jeweils C und N, N und C oder N und N repräsentieren.

24. Silane der Formel:
(OR*)₄₋ₐSi(R^{c})ₐ
In der:
- R^{c} eine katalytische Eigenfunktion zur Carbenerzeugung aus einem Produkt der Formel (II), (II'), (III) oder (III') wie in den Ansprüchen 5 und 8 definiert ist, wobei, in den Formeln (II), (II'), (III) und (III'), A und B jeweils C und N, N und C oder N und N repräsentieren,
- R* ein Alkyl ist,
- a = 1 bis 3.

25. Verwendung von Carben(en) wie in den vorstehenden Ansprüchen definiert als Katalysator oder Co-Katalysator bei der Herstellung von POS durch Polymerisierung und/oder Umverteilung von POS.

## Claims

1. A method for preparing polyorganosiloxanes (POSs) by ring-opening and/or redistribution polymerization of POSs, in the presence of a catalyst (C), **characterized in that** this catalyst (C) comprises at least one carbene.

2. The method as claimed in claim 1, **characterized in that** the carbene of the catalyst (C) comprises two nonbonding electrons, which are in the singlet or triplet, preferably singlet, form.

3. The method as claimed in either one of the preceding claims, **characterized in that** the carbene(s) of the catalyst (C) has (have) a general structure represented by formula (**I**°): 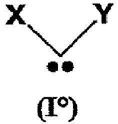 in which:
▪ X and Y are independently chosen from the group comprising: S, P, Si, N and 0;
▪ X and Y are optionally substituted;
▪ X and Y can be connected via at least one optionally substituted five-, six- or seven-membered hydrocarbon-based ring; or a five-, six- or seven-membered heterocycle comprising one or more hetero atoms chosen from the group comprising: S, P, Si, N and 0, and optionally substituted.

4. The method as claimed in claim 3, **characterized in that** the carbene(s) of the catalyst (C) has (have) a general structure represented by formula **(I), (I')** or **(I"):** 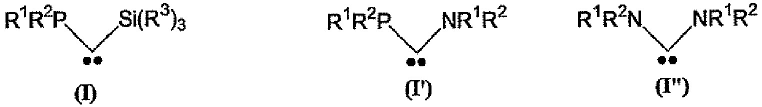 in which:
- R¹, R² and R³, which may be identical or different, independently represent an alkyl group; an optionally substituted cycloalkyl group; an optionally substituted aryl group; or
- the groups R¹ and R² can together form an optionally substituted five- or six-membered hydrocarbon-based ring; or else a five- or six-membered heterocycle comprising one or more hetero atoms chosen from the group comprising: S, P, Si, N and 0, and optionally substituted.

5. The method as claimed in claim 3, **characterized in that** the carbene(s) of the catalyst (C) correspond(s) to formula **(II)** or **(II'):** 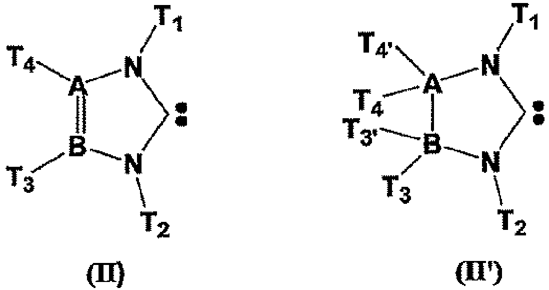 in which:
- A and B independently represent C or N, it being understood that:
• in formula **(II),** when A represents N, then T4 is not present, and when B represents N, then T3 is not present;
• in formula **(II'),** when A represents N, then T4 or T4' is not present, and when B represents N, then T3 or T3' is not present;
- T3, T3', T4 and T4' independently represent a hydrogen atom; an alkyl group; a cycloalkyl group optionally substituted with alkyl or alkoxy; an aryl group optionally substituted with alkyl or alkoxy; an alkenyl group; an alkynyl group; or an arylalkyl group in which the aryl part is optionally substituted with alkyl or alkoxy; or
- T3 and T4 can form, together and with A and B when the latter each represent a carbon atom, an aryl, it being understood that, in this case, T3' and T4' are not present;
- T1 and T2 independently represent an alkyl group; an alkyl group optionally substituted with alkyl; an alkyl group that is perfluorinated or optionally substituted with a perfluoroalkyl group; a cycloalkyl group optionally substituted with alkyl or alkoxy; an aryl group optionally substituted with alkyl or alkoxy; an alkenyl group; an alkynyl group; or an arylalkyl group in which the aryl part is optionally substituted with alkyl or alkoxy; or
T1 and T2 independently represent a monovalent radical of formula **(V)** below:
**-V1-V2** **(V)**
in which:
• V1 is a saturated or unsaturated, hydrocarbon-based divalent group, preferably an optionally substituted linear or branched C₁-C₁₀ alkylene,
• V2 is a monovalent group chosen from the group of the following substituents:
◆ alkoxy, -OR^{a} with R^{a} corresponding to hydrogen, alkyl or aryl;
◆ silyl, -Si(OR^{b})ₓ(R^{c})₃₋ₓ with R^{b} corresponding to hydrogen, alkyl, silyl or siloxanyl, R^{c} corresponding to alkyl or aryl, and x being an integer between 0 and 3;
◆ amine, preferably -N(R^{a})₂ with R^{a} corresponding to hydrogen, alkyl or aryl; or
- the substituents T1, T2, T3, T3', T4 and T4' can form, in pairs, when they are located on two adjacent vertices in formulae **(II)** and **(II'),** a saturated or unsaturated hydrocarbon-based chain.

6. The method as claimed in any one of the preceding claims, **characterized in that** the carbene(s):
• is (are) prepared separately,
• and/or is (are) generated in situ from at least one precursor.

7. The method as claimed in claim 6, **characterized in that** the precursor(s) is (are) a salt (salts) corresponding to the carbene(s), which is (are) reacted with at least one base, so as to generate the carbene(s) in situ.

8. The method as claimed in claim 6, **characterized in that** the corresponding salt(s) is (are) one (or more) corresponding heterocyclic salt(s) of general formula **(III)** or **(III'):** 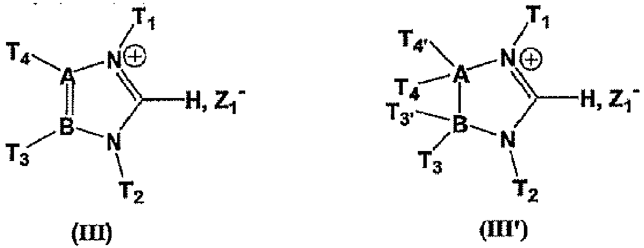 in which:
- A, B, T1, T2, T3, T3', T4 and T4' are as defined in claim 5;
- Z1 independently represents an anion derived from a Brönsted acid (protic acid) preferably chosen from the group comprising:
• carboxylic acids of formula Gₒ-COOH in which Gₒ represents an alkyl, and advantageously a C₁-C₂₂ alkyl; an aryl, advantageously a C₆-C₁₈ aryl optionally substituted with one or more C₁-C₆ alkyls;
• sulfonic acids of formula Gₒ-SO₃H in which Gₒ is as defined above;
• phosphoric acids of formula Gₒ-PO₃H in which Gₒ is as defined above;
• the following inorganic acids: HF, HCl, HBr, Hl, H₂SO₄, H₃PO₄, HClO₄ and HBF₄ taken on their own or in combination with one another;
• and mixtures thereof.

9. The method as claimed in any one of the preceding claims, **characterized in that** it is carried out, by homogeneous catalysis, in a liquid reaction medium in which are at least partially solubilized the catalyst (C) based on carbene (s) and/or its precursor(s) and the initial POSs, and optionally at least one base.

10. The method as claimed in any one of the preceding claims, **characterized in that** the solubility of the catalyst (C) based on carbene(s) and/or its precursor(s) is controlled by means of at least one solubilization helper and/or using one (or more) carbene(s) substituted with at least one appropriate group.

11. The method as claimed in any one of the preceding claims, **characterized in that** it is essentially carried out at a temperature T (°C) such that:
| | |
|---|---|
| | T ≤ 200 |
| preferably | 100 ≤ T ≤ 150 |
| and even more preferably | T ≤ 100. |

12. The method as claimed in claim 1, **characterized in that** the concentration of catalyst [C] (in mol per 100 g of initial POSs) in the reaction medium is such that:
| | |
|---|---|
| | [C] ≤ 1 |
| preferably | 10⁻⁵ ≤ [C] ≤ 10⁻¹ |
| and even more preferably | 10⁻⁵ ≤ [C] ≤ 10⁻³. |

13. The method as claimed in any one of the preceding claims, **characterized in that** the initial POSs comprise cyclic POSs (POScy), preferably chosen from those corresponding to general formula **(XI)** below: 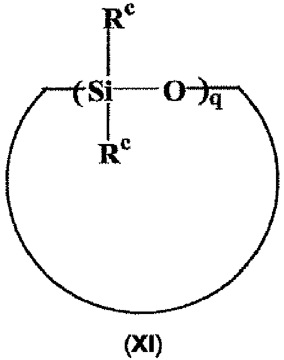 in which:
R^{c} represents hydrogen or an alkyl or aryl radical
and 3 ≤ q ≤ 12.

14. The method as claimed in any one of the preceding claims, **characterized in that** the initial POSs are linear and are preferably selected from those of general formula **(XII.1):**
**R^{a}-(R^{b})₂Si-O-]ₚ-Si(R^{b})₂-R^{a}** **(XII.1)**
in which:
- R^{a} independently represent a hydroxyl, an alkyl or an aryl, optionally comprising one or more hetero atoms and optionally substituted with halogens,
- R^{b} independently represent an alkyl or an aryl, optionally comprising one or more hetero atoms and optionally substituted with halogens,
- and p ≥ 2.

15. The method as claimed in claim 14 and, optionally, at least any one of the other preceding claims, **characterized in that** the final POS/POScy ratio in the reaction medium is greater than 85/15, preferably greater than or equal to 90/10, and even more preferably greater than or equal to 95/5.

16. The method as claimed in any one of the preceding claims, **characterized in that** the following are used:
o POSs substituted with catalytic functions able to generate carbenes, and preferably catalytic functions derived from products of formula **(I°), (I), (I'), (II), (II'), (III)** or **(III')** as defined in the preceding claims;
o and/or silanes of formula:
**(OR*)₄₋ₐSi(R^{c})ₐ**
in which:
• R^{c} is a catalytic function able to generate a carbene, and preferably a catalytic function derived from a product of formula **(I°), (I), (I'), (II), (II'), (III)** or **(III')** as defined in the preceding claims,
• R* is an alkyl,
• a = 1 to 3.

17. A composition that can be used in particular for the preparation of polyorganosiloxanes (POSs) by polymerization and/or redistribution of POSs, **characterized in that** it comprises:
* linear or nonlinear POSs and/or cyclic POSs (POScy) ;
* a catalyst (C) comprising at least one carbene in which the two nonbonding electrons are preferably in the singlet form; with the exclusion of any catalyst formed by at least one metal(s)/carbene(s) complex, in particular Pt/carbene(s);
* optionally, at least one solvent;
* and, optionally, linear POSs, for example polydialkyl (e.g. methyl)siloxanes MDₚM with p = 0 to 20, preferably 0 to 10, and more preferably p = 0: namely, disiloxanes, for example those belonging to the group comprising hexamethyldisiloxane (M2), vinylated M2 and hydrogenated M2.

18. The composition as claimed in claim 17, **characterized in that** the catalyst (C) is as defined in claims 2 to 8.

19. The composition as claimed in claim 18 or 19, **characterized in that** the initial POSs are as defined in claim 13 or 14.

20. The composition as claimed in any one of claims 17 to 19, **characterized in that** the catalyst (C) is generated in situ from at least one precursor chosen from the group comprising one or more salt(s) corresponding to the carbene(s), capable of reacting with at least one base, so as to generate the carbene(s) in situ.

21. The composition as claimed in any one of claims 17 to 20, **characterized in that** it comprises at least one solubilization helper and/or the carbene(s) is (are) substituted with at least one solubilizing group.

22. The composition as claimed in any one of claims 19 to 21, **characterized in that** the concentration of catalyst [C] (in mol per 100 g of initial POSs) in the reaction medium is such that:
| | |
|---|---|
| | [C] ≤ 1 |
| preferably | 10⁻⁵ ≤ [C] ≤ 10⁻¹ |
| and even more preferably | 10⁻⁵ ≤ [C] ≤ 10⁻³. |

23. POSs substituted with catalytic functions able to generate carbenes, derived from products of formula **(II), (II'), (III)** or **(III')** as defined in claims 5 and 8 where, in the formulae (II), (II'), (III) and (III'), A and B represent respectively C and N, N and C or N and N.

24. Silanes of formula:
**(OR*)₄₋ₐSi(R^{c})ₐ**
in which:
o R^{c} is a catalytic function able to generate a carbene, derived from a product of formula **(II), (II'), (III)** or **(III')** as defined in the claims 5 and 8 where, in the formulae (II), (II'), (III) and (III'), A and B represent respectively C and N, N and C or N and N,
o R* is an alkyl,
o a = 1 to 3.

25. Use of carbene(s) as defined in the preceding claims, as a catalyst or co-catalyst in the preparation of POSs by polymerization and/or redistribution of POSs.
